**Europäisches Patentamt**

**European Patent Office**

**Office européen des brevets**

(11) Numéro de publication : **0 312 422 B1**

(12)     # FASCICULE DE BREVET EUROPEEN

(45) Date de publication du fascicule du brevet :
**15.04.92 Bulletin 92/16**

(51) Int. Cl.$^5$ : **B26F 1/44,** B26D 7/26

(21) Numéro de dépôt : **88402477.9**

(22) Date de dépôt : **30.09.88**

(54) **Dispositif rotatif de découpe.**

(30) Priorité : **12.10.87 FR 8714035**

(43) Date de publication de la demande :
**19.04.89 Bulletin 89/16**

(45) Mention de la délivrance du brevet :
**15.04.92 Bulletin 92/16**

(84) Etats contractants désignés :
**AT BE CH DE ES GB GR IT LI LU NL SE**

(56) Documents cités :
**WO-A-84/01540**
**DE-C- 949 212**
**FR-A- 622 479**
**FR-A- 1 513 250**
**FR-A- 2 188 269**

(56) Documents cités :
**GB-A- 2 133 734**
**US-A- 3 810 055**
**US-A- 3 824 927**
**US-A- 3 975 976**
**US-A- 4 233 873**
**US-A- 4 237 786**

(73) Titulaire : **Buland, Jean-Jacques**
**10 rue Racine**
**F-91400 Orsay (FR)**

(72) Inventeur : **Buland, Jean-Jacques**
**10 rue Racine**
**F-91400 Orsay (FR)**

(74) Mandataire : **Hirsch, Marc-Roger**
**Cabinet Hirsch 34 rue de Bassano**
**F-75008 Paris (FR)**

Jouve, 18, rue Saint-Denis, 75001 PARIS

## Description

La présente invention se rapporte à un dispositif rotatif de découpe, notamment pour découper en continu des fenêtres, encoches ou orifices, dans une feuille de papier, de carton ou d'un autre support d'impression tel que de la matière plastique et comportant un noyau cylindrique central, au moins une coquille agencée autour dudit noyau central, au moins une matrice de découpe fixée sur ladite coquille et constituée par au moins une feuille métallique qui présente une arête tranchante de découpe en saillie par rapport au noyau central et au moins un trou d'aspiration et de soufflage pneumatique à l'intérieur de cette arête de découpe, la feuille métallique étant une plaque de tôle flexible et mince dont l'épaisseur est comprise entre 0,05 et 0,2 mm, plus préférablement 0,1 mm, en matériau magnétique et sur laquelle est formée en relief, dépassant par exemple de 0,2 à 0,5 mm, l'arête de découpe, la tôle magnétique mince étant plaquée sur la surface extérieure de la coquille de prise de la feuille de papier, au moins en partie sous l'effet d'une attraction magnétique exercée sur cette tôle.

Les dispositifs de découpe de fenêtres dans les papiers, notamment en vue de préparer des papiers pour enveloppe à fenêtre, utilisent des tambours ou cylindres tournants de découpe à grande vitesse de rotation. Sur ces tambours, est fixée une matrice de découpe réalisée par attaque chimique et qui, du fait qu'elle présente une faible épaisseur pour bien se plaquer sur la surface cylindrique du tambour, est très difficile à maintenir fermement à la surface du tambour.

Le document GB-A-2133734 décrit un dispositif rotatif de découpage à l'emporte-pièce pour produire des fenêtres dans des enveloppes et des cartonnages, comportant un cylindre de découpage sur lequel est placée une feuille métallique à revêtement photosensible présentant une arête tranchante dénudée par décapage et ayant la forme de la fenêtre devant être découpée. Il évoque l'utilisation connue d'un cylindre de découpage réalisé sous la forme d'un cylindre magnétique sur lequel la feuille de découpage adhère sans aucun autre élément mécanique de fixation. Un tel dispositif convient à la découpe des étiquettes mais risque de glisser sur le cylindre magnétique lorsqu'il s'agit de produire des fenêtres dans des enveloppes ou des cartonnages.

Afin d'améliorer l'attraction magnétique d'un cylindre à alimentation permanente, le document FR-A-2188269 propose un cylindre destiné à maintenir fermement contre la surface extérieure du cylindre un tampon flexible ou analogue qui contient des matériaux magnétiques. Le cylindre est constitué de plusieurs éléments magnétiques qui comportent des aimants permanents et qui sont fixés parallèlement les uns aux autres selon une disposition radiale autour d'un noyau dont l'axe définit l'axe du cylindre. Les cylindres selon l'art antérieur ne sont pas adaptés pour maintenir une matrice de découpe apte à découper en continu des fenêtres ou encoches dans des enveloppes ou des cartonnages et la présente invention se propose de simplifier la fixation des matrices de découpe en tôle mince en exploitant leur caractère souple pour réaliser une fixation par placage magnétique garantissant non seulement une fixation rapide et aisée, mais aussi un maintien en position de longue durée sans aucune pièce saillante et de façon très économique et sûre.

A cet effet, selon l'invention au moins une coquille présente une surface extérieure hémicylindrique et porte plusieurs barres ou rangées axiales parallèles d'aimants permanents affleurant la surface cylindrique extérieure de la coquille, lesdites barres ou rangées d'aimant étant enchâssées chacune dans une rainure axiale réalisée dans la surface extérieure hémicylindrique de la coquille tandis qu'entre les rainures axiales débouchent des rangées de trous d'aspiration et de soufflage susceptibles d'aspirer la feuille de papier portée par la coquille et que la plaque de tôle flexible mince de la matrice de découpe présente une largeur propre à lui faire recouvrir, sur chacun de ses deux bords latéraux, une barre ou une rangée axiale d'aimants permanents et comporte des trous d'aspiration et de soufflage susceptibles de venir sensiblement en face des trous correspondants de la coquille de prise de la feuille de papier lorsque la plaque de tôle de la matrice de découpe recouvre sensiblement, sur chacun de ses bords latéraux, une barre ou rangée axiale d'aimants permanents.

Selon un mode de réalisation du tambour portant les barres d'aimants permanents, la coquille qui porte les aimants permanents est réalisée en un matériau amagnétique afin d'obliger les lignes de force magnétiques à sortir radialement des aimants et à éviter la concentration des forces d'attraction des aimants permanents sur les zones de bords de ces aimants.

Selon un mode de réalisation facilitant le montage précis de la matrice de découpe, le dispositif comporte deux coquilles à surfaces extérieures hémicylindriques et l'une des coquilles du cylindre de découpage comporte une cale ou règle sur la surface latérale en saillie de laquelle est susceptible de venir en appui une arête droite de la plaque de tôle flexible de la matrice de découpe portée par l'autre coquille.

L'invention est appliquée à la matrice de découpe en tôle mince qui vient d'être explicitée et qui est destinée à être plaquée par attraction magnétique sur la surface cylindrique extérieure d'une coquille de prise de papier.

D'autres buts, avantages et caractéristiques apparaîtront à la lecture de la description d'un mode de réalisation de l'invention, faite à titre non limitatif et en regard du dessin annexé, où:

– la figure 1 est une vue en coupe transversale du cylindre de support d'une matrice de découpe selon l'invention;

– la figure 2 est une vue en coupe transversale de la plaque flexible mince constituant la matrice de découpe, après sa dépose du cylindre de support de la figure 1;

– la figure 3 est une vue en plan de la plaque flexible représentée en coupe à la figure 2;

– la figure 4 est une vue en coupe transversale d'un autre mode de réalisation du cylindre de support de matrices de découpe selon l'invention;

– la figure 5 est une vue partielle de dessus d'une rangée de trous d'aspiration ménagés à la surface du cylindre représenté à la figure 4.

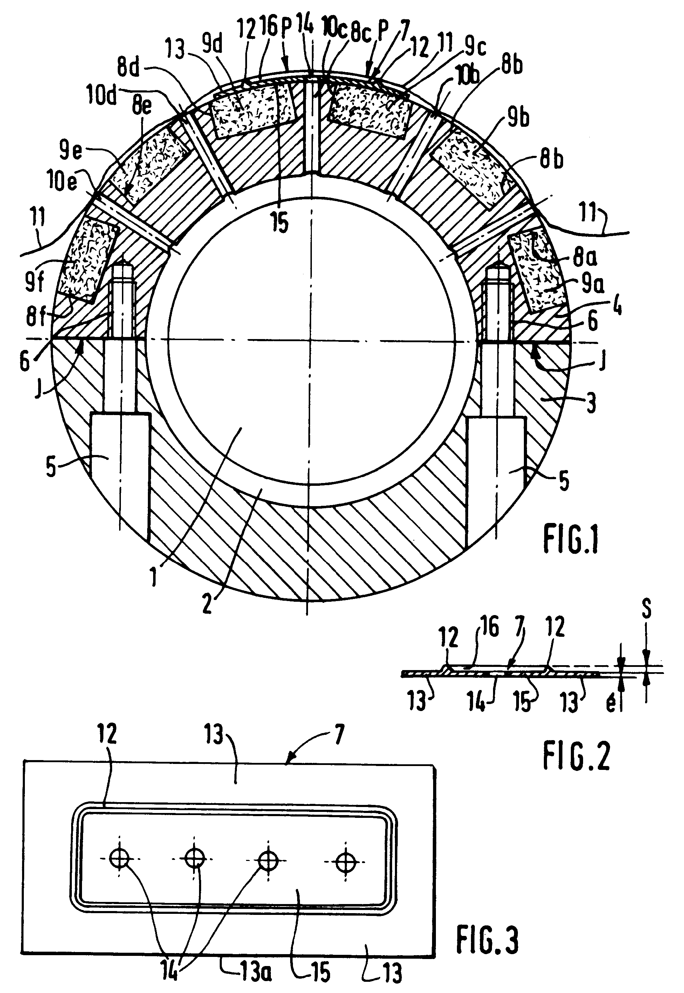

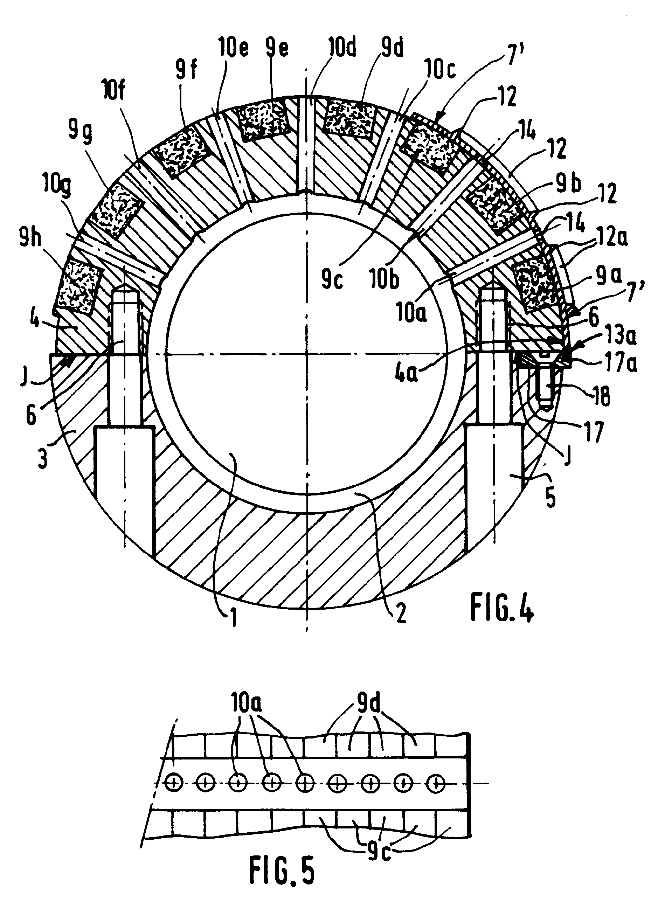

Si l'on se reporte aux figures 1 et 4, on voit qu'un noyau cylindrique central 1 d'un tambour de découpe délimite un passage ou canal annulaire 2 d'air d'aspiration ou de soufflage relié à un circuit de commutation pneumatique non représenté contrôlant les phases successives de succion d'une feuille de papier par liaison à une source de dépression, puis de soufflage de cette feuille par mise en communication avec une source d'air comprimé.

Autour du noyau 1, sont assemblées de façon étanche selon un plan de joint J deux demi-coquilles hémicylindriques 3 et 4, à l'aide de vis (non représentées), à tête noyée dans un lamage 5 et dont le corps fileté est vissé dans un alésage fileté correspondant 6 ménagé dans la demi-coquille 4. Sur la figure 1, la surface extérieure de la demi-coquille 4 porte une matrice 7 de découpe rapide dans une feuille de papier 11, de fenêtres, encoches ou orifices obtenus par poinçonnage de serrage en prenant appui contre un cylindre complémentaire de sectionnement à surface lisse et qui tourne en synchronisme avec le noyau central 1.

Selon l'invention, la demi-coquille supérieure 4 (selon la figure) comporte, à sa périphérie, plusieurs rainures axiales parallèles 8a à 8f dans chacune desquelles est enchâssée une barre d'aimants permanents 9a à 9f, de forme complémentaire et dont la surface extérieure aimantée vient affleurer la périphérie du cylindre. Afin d'augmenter l'effet magnétique créé par les barres d'aimants permanents, on peut disposer ces barres en dix pôles opposés, les pôles nord et sud se succédant et la paroi de la demi-coquille 4 peut être réalisée en un matériau amagnétique obligeant les lignes de force des barres d'aimants permanents à sortir radialement de la surface extérieure de ces barres plutôt qu'à se diriger tangentiellement vers un barreau voisin, via un circuit de fer. Il est également possible d'utiliser pour la demi-coquille supérieure 4 un acier courant susceptible de se magnétiser, car les lignes de trous 10a à 10g relativement rapprochés (voir la figure 5) constituent une résistance à la perméabilité magnétique et obligent les lignes de force magnétique des circuits des aimants permanents à sortir radialement.

Entre les rainures 8a à 8f voisines, sont percés des trous radiaux 10a à 10e qui sont reliés au passage annulaire d'air 2 et dont les orifices de sortie à la surface extérieure du cylindre constituent des orifices d'aspiration et de maintien d'une feuille de papier 11 lorsque le passage annulaire 2 est relié à une source de dépression. Les orifices des trous radiaux 10a à 10e permettent la dépose de la feuille de papier 11 et de la fenêtre découpée dans ce papier par soufflage en reliant, à l'instant de la dépose, le passage annulaire 2 à une source d'air comprimé à faible surpression.

La matrice de découpe 7 représentée libre et en coupe à la figure 2 est constituée d'une plaque de tôle en matériau magnétique, par exemple en acier doux, dans laquelle on sculpte, par tout moyen adéquat, notamment par attaque chimique, une arête de coupe 12 qui peut être continue (voir la figure 3) et qui est durcie après usinage pour découper des fenêtres. L'arête de coupe 12 peut être discontinue pour découper des encoches ou même peut être constituée par un simple trait pour découper des fentes dans le papier. Après l'attaque chimique, l'arête de coupe 12 peut présenter par exemple une saillie S de 0,44 mm de hauteur alors qu'en dehors de la zone d'arête il ne subsiste plus qu'une épaisseur é = 0,1 mm du métal de la plaque de départ qui présentait, avant l'attaque chimique, une épaisseur d'environ 0,54 mm. La matrice de découpe se présente avant fixation sur la demi-coquille 4 sous la forme d'une plaque très mince 13 parfaitement flexible et qui porte en saillie l'arête de coupe 12. Pour assurer le maintien du papier 11 en face de la matrice de découpe, plusieurs trous d'aspiration et de soufflage 14 sont ménagés dans la tôle mince 15 subsistant à l'intérieur de l'arête 12.

Dès que la matrice de découpe 7 en plaque mince est approchée de la périphérie de la demi-coquille supérieure 4, sa tôle mince est violemment attirée par les aimants les plus proches 9c et 9d sur la surface extérieure desquels elle s'applique (littéralement se plaque) énergiquement. La plaque mince 13, 15 de la matrice 7 présentant une bonne perméabilité magnétique, la plupart des lignes de force qui sortaient auparavant radialement des aimants 9c et 9d (voir la figure 1) sont alors déviées sur la plaque qui est traversée par une induction magnétique relativement élevée et des effets d'attraction magnétique se développent radialement entre la surface de la plaque mince 13, 15 et la surface cylindrique des aimants 9c, 9d, ces efforts étant proportionnels au carré de l'induction magnétique existant à la surface de contact.

La matrice de découpe 7 prend ainsi la forme arquée représentée à la figure 1 et reste plaquée énergiquement sur la surface cylindrique extérieure des aimants permanents 9c, 9d avec une attraction telle qu'elle reste rigidement en position et qu'il n'est possible de la déplacer qu'en agissant tangentiellement avec des forces importantes ou après avoir réduit artificiellement l'induction locale, par exemple en disposant des aimants permanents de polarité opposée.

Les trous d'aspiration et de soufflage 14 de la matrice 7 viennent se placer sensiblement en face des trous alignés 10c (voir la figure 5 où est représenté un alignement de trous d'aspiration-soufflage 10a) ménagés dans la demi-coquille supérieure 4. Pendant une période de travail avec une feuille de papier 11 engagée sur la matrice de découpe 7, comme représenté à la figure 1, lorsque le canal annulaire 2 est relié à une source de dépression, l'espace 16 situé à l'intérieur de l'arête de coupe 12 et entre la feuille de papier 11 et la tôle mince 15 est mis en dépression, ce qui permet à la pression atmosphérique agissant suivant les flèches PP à la figure 1 de presser la feuille de papier 11 sur l'arête 12 pour la maintenir en position de découpe et de faciliter ainsi la découpe de la fenêtre dans le papier 11 au moment de la pression du papier 11 sur le cylindre complémentaire lisse non représenté.

Le fonctionnement du dispositif rotatif de découpe qui vient d'être décrit va maintenant expliqué. La demi-coquille supérieure 4 est équipée de sa matrice de découpe 7 soigneusement réglée en position et plaquée sur la surface extérieure des aimants 9a à 9f (selon la figure 1 uniquement sur les aimants 9c et 9d). Le noyau rotatif 1 tourne de manière à placer la demi-coquille 4 en face de la feuille supérieure 11 d'une pile de feuille de papier. Le passage annulaire 2 est ensuite relié à une source de dépression, ce qui plaque la feuille 11 sur la face extérieure cylindrique de la demi-coquille et sur l'arête 12 de la matrice de découpe 7. Le noyau central 1 tourne alors d'un demi tour et vient s'appliquer par roulement sur un cylindre de découpe complémentaire non représenté et présentant une surface cylindrique extérieure lisse sur laquelle vient porter fermement l'arête 12. La fenêtre délimitée par l'arête 12 est ainsi progressivement découpée par la pression de cette arête 12 sur la surface lisse du cylindre complémentaire. En variante, on peut remplacer le cylindre de découpe lisse par une barrette montée fixe et sur laquelle vient porter la feuille de papier 11 au cours du découpage de la fenêtre par la pression de l'arête 12. Cette barrette de section rectangulaire ou cylindrique est réalisée en un matériau résistant à l'abrasion tel que le carbure de tungstène ou la céramique.

Pour détacher la fenêtre de découpe de l'enveloppe, il est possible de mettre en soufflage le trou 10c par un circuit spécifique d'air comprimé non représenté. La liaison du passage annulaire 2 à une source d'air comprimé à faible surpression permet de décharger la feuille 11 après découpe de la fenêtre et le noyau central 1 tourne alors avec les demi-coquilles 3 et 4 pour ramener la demi-coquille 4 portant la matrice de découpe 7 en face d'une nouvelle feuille 11 placée au-dessus d'une pile de feuilles.

Selon un autre mode d'exploitation préféré par la requérante, le papier 11 dans lequel il est nécessaire de réaliser des fenêtres défile en continu entre les deux coquilles 3 et 4 qui tournent en face d'un cylindre lisse complémentaire et dès que la feuille de papier 11 a quitté la zone de la matrice de découpe 7, un soufflage est appliqué par mise en surpression du passage annulaire 2, ce qui a pour effet d'évacuer la fenêtre découpée dans le papier et de décoller la feuille de papier 11 du tambour portant la matrice de découpe 7; la feuille de papier 11 avance alors d'une longueur pendant que le noyau central 1 effectue un tour pour ramener la matrice de découpe 7 en face d'une nouvelle fenêtre à découper.

Selon le mode de réalisation du tambour support de la matrice représenté à la figure 4, on retrouve sensiblement les mêmes éléments principaux qu'à la figure 1. Les barres aimantées 9a à 9f sont remplacées par des rangées d'aimants permanents 9a à 9h dont la largeur est beaucoup plus faible que la longueur des barres. Ces aimants permanents sont réalisés en un matériau présentant un plus fort pouvoir coercitif que celui des barres mais n'autorisant que la fabrication de petites pastilles d'aimants. Les trous intercalaires 10a à 10g présentent une section légèrement plus grande que ceux représentés à la figure 1.

Une cale de section rectangulaire 17 est fixée par des vis 18 au voisinage d'une arête diamétrale de la demi-coquille 3 et débouche sur le plan de joint J pour constituer une règle de butée d'extrémité pour la matrice de découpe 7. Dans le mode de réalisation représenté à la figure 4, on voit une matrice de découpe 7 à deux fenêtres délimitées par des arêtes de coupe 12 et 12a. L'épaisseur des plaques de la matrice 7' est légèrement exagérée pour permettre de bien distinguer la matrice à la surface de la demi-coquille 4. Seule la fenêtre délimitée par l'arête de coupe 12 est munie d'une ligne de trous de soufflage 14 car l'intérieur de l'arête de coupe 12a tombe juste en face de l'aimant 9a non percé de trous de soufflage. L'arête inférieure droite 13a de la matrice 7' vient en appui sur la surface supérieure plane en saillie 17a de la cale 17, ce qui détermine avec précision la position de la matrice de coupe 7' qui occupe toute la largeur de la demi-coquille 4.

Dans ce mode de réalisation, le réglage en position de la matrice 7' est immédiat. En effet, pour placer la matrice de découpe 7' sur la coquille supérieure 4, il suffit d'appliquer l'arête inférieure 13a de la matrice de découpage (voir l'arête 13a représentée également à la figure 3 sur la matrice 7) en appui, simultanément sur la face 17a formant règle de la cale 17 et sur la surface cylindrique extérieure 4a de la coquille 4, la feuille métallique 13 correspondant bien à la largeur de la coquille 4. En rapprochant la feuille 13 de la surface cylindrique extérieure de la coquille 4 sur toute sa surface, la feuille 13 est plaquée par l'attraction magnétique des aimants permanents 9a, 9b et 9c sur cette surface extérieure tout en restant en appui par son arête droite 13a sur la face 17a formant règle et le positionnement de la matrice de découpe 7' est parfait sur la coquille 4.

Si un léger écart de positionnement se révèle, soit en largeur par rapport à la coquille 4, soit par mise en biais du fait qu'un intervalle s'ouvre entre l'arête inférieure 13a et la surface 17a de la cale 17, il est possible de faire glisser la feuille 13 de la matrice 7' en position sur la surface de la coquille 4 à l'aide d'un outil de calage, le cas échéant après suppression partielle de l'attraction magnétique. La cale 17 permet ainsi de repérer et d'obtenir très rapidement le positionnement exact de la matrice 7' sur la surface de la coquille 4 grâce au léger dépassement de la cale 17 sur la surface du tambour de découpe, ce dépassement pouvant être réduit jusqu'à 1/10 de mm sans que la fonction d'appui et de positionnement de l'arête 13a n'en soit affectée. Du fait que la largeur de la matrice 7' est égale à celle de la demi-coquille 4 qui peut comporter des lignes de soufflage à vingt neuf trous 10, le réglage de la position de la matrice est facilité. Il est possible de passer à la découpe toutes les laizes de papier 11 depuis celles de largeur minimum jusqu'à celles de largeur correspondant à celle de la demi-coquille 4, car le papier ne peut pas glisser latéralement du fait de la faible épaisseur de la matrice 7, 7'. La séparation de la demi-coquille magnétique 4 avec l'autre coquille inerte 3 n'est plus nécessaire que pour les changements de demi-coquille magnétique.

On voit à la figure 5 les trous 10a alignés d'aspiration et de soufflage dont certains correspondent aux trous 14 ménagés dans la tôle mince 15 de la matrice 7. De chaque côté des trous est alignée une rangée d'aimants permanents 9c et 9d de petite section unitaire en un matériau magnétique à forte rémanence ne permettant pas de réaliser de longues barres magnétiques.

## Revendications

1. Dispositif rotatif de découpe, notamment pour découper en continu des fenêtres, encoches ou orifices dans une feuille de papier (11), de carton ou d'un autre support d'impression tel que de la matière plastique et comportant un noyau cylindrique central (1), au moins une coquille (4) agencée autour dudit noyau central (1), au moins une matrice de découpe fixée sur ladite coquille (4) et constituée par au moins une feuille métallique (13, 15) qui présente une arête tranchante de découpe (12) disposée en saillie vers l'extérieur par rapport au noyau central (1) et au moins un trou d'aspiration et de soufflage pneumatique (14) à l'intérieur de cette arête de découpe, la feuille métallique étant une plaque de tôle flexible et mince (13, 15) dont l'épaisseur est comprise entre 0,05 et 0,2 mm, plus préférablement 0,1 mm, en matériau magnétique et sur laquelle est formée en relief, dépassant par exemple de 0,2 à 0,5 mm, l'arête de découpe (12), la tôle magnétique mince (13, 15) étant plaquée sur la surface extérieure de la coquille (4) de prise de la feuille de papier (11), au moins en partie sous l'effet d'une attraction magnétique exercée sur cette tôle, caractérisé en ce qu'au moins une coquille (4) présente une surface extérieure hémicylindrique et porte plusieurs barres ou rangées axiales parallèles d'aimants permanents (9a à 9f) affleurant la surface cylindrique extérieure de la coquille (4), lesdites barres ou rangées d'aimants étant enchâssées chacune dans une rainure axiale (8a à 8f) réalisée dans la surface extérieure hémicylindrique de la coquille (4), en ce qu'entre les rainures axiales (8a à 8f) débouchent des rangées de trous d'aspiration et de soufflage (10a à 10e) susceptibles d'aspirer la feuille de papier (11) portée par la coquille (4) et en ce que la plaque de tôle flexible mince (13, 15) de la matrice de découpe présente une largeur propre à lui faire recouvrir, sur chacun de ses deux bords latéraux, une barre ou une rangée axiale d'aimants permanents (9c, 9d) et comporte des trous d'aspiration et de soufflage (14) susceptibles de venir sensiblement en face de trous correspondants (10c) de la coquille (4) de prise de la feuille de papier (11) lorsque la plaque de tôle (13, 15) de la matrice de découpe recouvre sensiblement, sur chacun de ses bords latéraux, une barre ou rangée axiale d'aimants permanents (9c, 9d).

2. Dispositif selon la revendication 1, caractérisé en ce que la coquille (4) qui porte les aimants (9a à 9f) est réalisée en un matériau amagnétique afin d'obliger les lignes de forces magnétiques à sortir radialement des aimants et d'éviter la concentration des forces d'attraction des aimants permanents sur les zones de bord de ces aimants.

3. Dispositif selon les revendications 1 ou 2, caractérisé en ce que le dispositif comporte deux coquilles à surfaces extérieures hémicylindriques et en ce que l'une des coquilles (3) comporte une cale ou règle (17) sur la surface latérale en saillie (17a) de laquelle est susceptible de venir en appui une arête droite (13a) de la plaque de tôle flexible (13, 15) de la matrice de découpe (7, 7') portée par l'autre coquille (4).

## Patentansprüche

1. Drehbare Schneidvorrichtung, vor allem zum aufeinanderfolgenden Ausstanzen von Fenstern, Kerben oder Öffnungen in ein Blatt Papier (11), Karton oder eine andere Druckauflage wie zum Beispiel Kunststoff und die aufweist: einen zylindrischen Mittelkern (1), wenigstens eine um diesen Mittelkern (1) angeordnete Schale (4), wenigstens eine auf dieser Schale (4) angeordnete und aus wenigstens einem Metallblatt (13, 15) bestehende Schnittmatrize die eine scharfe Schneidkante (12) darstellt die fliegend nach aussen im Verhältnis zu dem Mittelkern (1) angeordnet ist und wenigstens eine pneumatische Saugund Blasöffnung (14) im Inneren dieser Schneidkante, wobei das Metallblatt eine biegsame und dünne Blechplatte (13, 15) ist mit einer Dicke zwischen 0,05 und 0,2 mm, vorzugsweise 0,1 mm, aus magnetischem Material und auf der im Relief, zum Beispiel von 0,2 auf 0,5 mm übergehend, die Schneidkante (12) ausgebildet ist, wobei das dünne magnetische Blech (13, 15) auf der äusseren Oberfläche der das Papierblatt (11) aufnehmenden Schale (4) aufgelegt ist, wenigstens zum Teil unter der auf dieses Blech ausgeübten magnetischen Anziehung, dadurch gekennzeichnet, dass wenigstens eine Schale (4) eine äussere halbzylindrische Oberfläche aufweist und mehrere axiale parallele Stäbe oder Reihen von Dauermagneten (9a bis 9f) trägt die fluchtend auf der zylindrischen äusseren Oberfläche der Schale (4) liegen, wobei diese Magnetstäbe- oder Reihen jeweils in eine auf der äusseren halbzylindrischen Oberfläche der Schale (4) angefertigten axialen Rille (8a bis 8f) eingebracht sind, und dadurch, dass zwischen den axialen Rillen (8a bis 8f) Reihen von Saug- und Blasöffnungen (10a bis 10e) einmünden die das von der Schale (4) gehaltene Papierblatt aufsaugen können und dadurch dass die biegsame dünne Blechplatte (13, 15) der Schnittmatrize eine Breite aufweist die geeignet ist auf jeder ihrer Seitenkanten einen axialen Stab oder eine axiale Reihe von Dauermagneten (9c, 9d) zu bedecken und Saug- und Blaslöcher (14) enthält die wesentlich gegenüber entsprechenden Löchern (10c) der Schale (4) zur Abnahme des Papierblatts (11) angebracht werden können wenn die Blechplatte (13, 15) der Schnittmatrize, auf jeder ihrer Seitenkanten, einen axialen Stab oder Reihe von Dauermagneten (9c, 9d) wesentlich bedeckt.

2. Vorrichtung nach Anspruch 1, dadurch gekennzeichnet, dass die Schale (4) die die Magneten (9a bis 9f) trägt aus einen unmagnetischen Material angefertigt ist um die magnetischen Feldlinien zu zwingen radial aus den Magneten herauszutreten um die Konzentration der Anziehungskräfte der Dauermagneten auf den Randzonen dieser Magneten zu vermeiden.

3. Vorrichtung nach Ansprüchen 1 oder 2, dadurch gekennzeichnet, dass die Vorrichtung zwei Schalen mit halbzylindrischen Aussenoberflächen aufweist und dadurch dass eine der Schalen (3) einen Anschlagkeil oder Schiene (17) aufweist auf deren überhängender Seitenoberfläche (17a) eine rechte Kante (13a) der biegsamen Blechplatte (13, 15) der Schnittmatrize (7, 7') die von der anderen Schale (4) getragen wird, angelehnt werden kann.

## Claims

1. Rotary cutting out device notably for continuous cutting out of windows, notches or holes in a sheet of paper (11), card board or another printing support such as plastics material and comprising a central cylindrical core (1) at least one shell (4) provided around said central core (1), at least one cutting out die fixed onto said shell (4) and consisting of at least one metallic thin plate (13, 15) having a cutting edge (12) disposed so as to project outwards with respect to the central core (1) and at least one pneumatic sucking and blowing hole (14) arranged internally of said cutting edge, the thin metal plate being a thin flexible sheet metal plate (13, 15) having a thickness of between 0.05 and 0.2 mm more preferably 0.1 mm in a magnetic material and on which a projecting cutting edge (12) is formed that stands out by for example 0.2 to 0.5 mm, the thin magnetic sheet (15) being firmly held onto the outer surface of the shell (4) for retaining the sheet of paper (11) at least partially due to the effect of magnetic attraction exercised on said thin plate, characterized in that at least one shell (4) has an outer semi-cylindrical surface and carries several axial bars or parallel rows of permanent magnets (9a to 9f) flush with the outer cylindrical surface of the shell (4), said bars or rows of magnets being each set into an axial groove (8a to 8f) provided in the outer semi-cylindrical surface of the shell (4), in that between the axial grooves (8a to 8f), rows of suction and blowing holes (10a to 10e) are open and are adapted to suck the sheet of paper (11) carried by shell (4), and in that the thin flexible metal sheet (13, 15) of the cutting out die has a width that is such that it covers, at each of its lateral sides, an axial bar or a row of permanent magnets (9c, 9d) and includes sucking and blowing holes (14) adapted to substantially come to lay opposite corresponding holes (10c) in the shell (4) for retaining the sheet of paper (11) when the plate of sheet metal (13, 15) of the cutting out die substantially covers, at each one of its lateral sides, an axial bar or row of permanent magnets (9c, 9d).

2. Device according to claim 1, characterized in that the shell (4) carrying the magnets (9a to 9f) is made of a non-magnetic material in order to oblige the magnetic lines of force to project radially from the magnets and to avoid concentration of magnetic attraction forces at the edge regions of said magnets.

3. Device according to claims 1 or 2, characterized in that the device includes two shells having outer semi-cylindrical surfaces and in that one of the shells (3) includes a packing piece or positioning insert (17) against the projecting lateral surface (17a) of which a straight edge (13a) of the thin sheet metal flexible plate (13, 15) of the cutting out die (7, 7') carried by the other shell (4) is designed to come into abutment.

FIG.1

FIG.2

FIG.3

FIG.4

FIG.5